# EUROPEAN PATENT SPECIFICATION

(11) **EP 2 626 261 B1**
(45) Date of publication and mention of the grant of the patent: **17.07.2019**
(21) Application number: 11830512.7
(22) Date of filing: 22.09.2011
(51) Int. Cl.: B60T 8/17

(54) **ELECTRIC VEHICLE BRAKE CONTROL DEVICE**
BREMSSTEUERVORRICHTUNG FÜR EIN ELEKTROFAHRZEUG
DISPOSITIF DE COMMANDE DE FREIN DE VÉHICULE ÉLECTRIQUE

(30) Priority: 08.10.2010 JP 2010228082
(43) Date of publication of application: 14.08.2013
(73) Proprietor: NISSAN MOTOR CO., LTD., Yokohama-shi, Kanagawa 221-0023 (JP)
(72) Inventor: MORISHITA, Shinichiro, Kanagawa 243-0123 (JP)
(74) Representative: Grünecker Patent- und Rechtsanwälte PartG mbB
(86) International application number: PCT/JP2011/071623
(87) International publication number: WO 2012/046579

(56) References cited:
- WO-A1-2009/081270
- JP-A- 7 331 705
- JP-A- 2009 107 575
- JP-A- 2009 264 288
- US-A1- 2002 101 114

## Description

The present invention relates to a brake control device.

Prior art document WO 2009/081270 A1 discloses a brake control device of an electric vehicle, comprising: a master cylinder that produces a master cylinder pressure in accordance with a driver's operation; a brake fluid pressure actuator that includes a wheel cylinder that is installed to each of front and rear road wheels to apply each road wheel with a hydraulic braking force in accordance with a wheel cylinder pressure, a hydraulic pump that is installed between the master cylinder and the wheel cylinder and driven by a pump motor and a differential pressure regulating valve that controls a pressure difference between the wheel cylinder pressure and the master cylinder pressure under operation of the pump motor; a regenerative braking force control means that is connected to a vehicle drive electric motor connected to the drive road wheels and controls a regenerative braking force produced by the vehicle drive electric motor; and a regenerative cooperative brake control means that carries out such a control as to achieve a driver-desired deceleration based on the sum of a base hydraulic pressure part produced by the master cylinder pressure and a regenerative part produced by the regenerative braking force and compensate an insufficient regenerative part with a pressure increased part produced by the brake fluid pressure actuator.

Hitherto, a vehicle brake control device has been proposed in which a regenerative cooperative brake control is carried out by achieving a deceleration, which is desired by a driver, based on the sum of a base hydraulic pressure part and a regenerative part and compensating an insufficient regenerative part with a pressure increased part of the base hydraulic pressure (for example, Patent Document 1).

In this conventional device, by controlling a differential pressure regulating valve installed between a master cylinder and a wheel cylinder and causing a hydraulic pump to effect a pumping up pressure increase, there is produced a wheel cylinder pressure that is higher than a master cylinder pressure and uses a pressure difference thus produced as a pressure increased part. Control for the differential pressure regulating valve is carried out by varying a valve operation current via a feedforward control in such a manner as to obtain a target differential pressure under a condition wherein a VDC motor of the hydraulic pump is operating.

However, in the conventional vehicle brake control device, an operation current value for the differential pressure regulating valve is determined through the feedforward control that is adapted to an operation condition of the VDC motor of the hydraulic pump. Thus, when the VDC motor of the hydraulic pump is stopped, the pressure difference between the wheel cylinder pressure and the master cylinder pressure becomes lower than an expected value thereby inducing a shortage of braking force that would be produced by the pressure increased part and thus, due to lowering of the deceleration of the vehicle, providing the driver of the vehicle with an uncomfortable feeling.

That is, although the brake fluid led from the hydraulic pump increases the wheel cylinder pressure, once the increased pressure brings about a pressure difference that exceeds a desired level, the brake fluid is released to a master cylinder side through the differential pressure regulating valve to adjust and keep the differential pressure at the desired level. However, once the VDC motor of the hydraulic pump is stopped, flowing of the brake fluid is suppressed and thus there is no brake fluid that is to be released to the master cylinder side through the differential pressure regulating valve. In this case, the pressure increased part in the wheel cylinder side, which has been produced due to an office effect of the differential pressure regulating valve, is reduced and thus the pressure difference becomes lower than the expected value.

### Prior Art Document:

### Patent Document:

Patent Document 1: Japanese Laid-open Patent Application (Tokkai) 2006-168460

It is an object of the present invention to provide a brake control device of an electric vehicle which can solve the uncomfortable feeling that would be applied to the driver due to the lowering of the deceleration that takes place when the pump motor for compensating the pressure increased part at the time controlling the regenerative cooperative braking operation is stopped.

In order to achieve the above-mentioned object, the present invention provides a brake control device of an electric vehicle having the features of independent claim 1. Preferred embodiments are laid down in the dependent claim. Accordingly, it is provided an electric vehicle brake control device that comprises a master cylinder, wheel cylinders, a brake fluid pressure actuator, a regenerative braking force control means, a regenerative cooperative brake control means, and a differential pressure valve operation control means. The master cylinder produces a master cylinder pressure in accordance with a driver's operation. The wheel cylinders are installed to front and rear road wheels and apply each the road wheels with a hydraulic pressure braking force. The brake fluid pressure actuator is arranged between the master cylinder and the wheel cylinder and has a hydraulic pump that is driven by a pump motor and a differential pressure regulating valve that, under operation of the pump motor, controls a pressure difference between the wheel cylinder and the master cylinder. The regenerative braking force control means is connected to an electric motor connected to vehicle driving road wheels to control a regenerative braking force. The regenerative cooperative brake control means carries out such a control as to achieve a deceleration, which is desired by the driver and will be called "driver-desired deceleration" hereinafter, based on the sum of a base hydraulic pressure part produced by the master cylinder pressure and a regenerative part produced by the regenerative braking force and compensate an insufficient regenerative part with a pressure increased part produced by the brake fluid pressure actuator. The differential pressure regulating valve operation control means carries out a differential pressure control, which is effected by the differential pressure regulating valve, based on a rotation speed of the pump motor when the regenerative cooperative brake control stops the pump motor.

Accordingly, upon braking operation, due to function of the regenerative cooperative brake control means, the driver-desired deceleration is achieved by the sum of the base hydraulic pressure part and the regenerative part and the insufficient regenerative part is compensated by the pressure increased part produced by the brake fluid pressure actuator. Furthermore, due to function of the differential pressure regulating valve operation control means, when the regenerative cooperative brake control stops the pump motor, the differential pressure control by the differential pressure regulating valve is carried out based on the rotation speed of the pump motor. That is, if, at the time of stopping the pump motor, the control for obtaining the desired pressure difference is kept under running of the pump motor, the pressure difference between the wheel cylinder pressure and the master cylinder pressure becomes lower than the expected value inducing a shortage of braking force that would be produced by the pressure increased part. While, contrary to this, in place of the differential pressure control effected under operation of the pump motor, the differential pressure control under shutdown condition of the pump motor is carried out based on the rotation speed of the pump motor that represents a flow rate change of the brake fluid. Accordingly, the pressure difference between the wheel cylinder pressure and the master cylinder pressure can be kept to the expected value, so that the undesired lowering of the deceleration of the vehicle that would be caused by the shortage of braking force produced by the pressure increased part can be suppressed. As is described hereinabove, when the regenerative cooperative brake control stops the pump motor by which the pressure increased part is compensated, lowering of the deceleration of the vehicle takes place thereby protecting the driver from having the uncomfortable feeling.

### Brief Description of Drawings:

Fig. 1 is a diagram showing a construction of a hybrid vehicle (one example of electric vehicles) of front wheel drive type to which a brake control device of an embodiment-1 of the invention is practically applied.
Fig. 2 is a schematic drawing of a brake fluid circuit showing a VDC brake fluid pressure unit (one example of brake fluid pressure actuators) employed in the brake control device of the embodiment-1.
Fig. 3 is a flowchart depicting a flow of a regenerative cooperative brake control that is executed in an integrated controller employed in the brake control device of the embodiment-1.
Fig. 4 is a deceleration characteristic diagram depicting a relationship between a deceleration and an input by a driver (which will be called "driver-input" hereinafter) in case of obtaining a driver-desired deceleration with the aid of a vacuum brake booster upon braking operation.
Fig. 5 is a deceleration characteristic diagram depicting a relationship between a deceleration and a driver-input in case wherein an off-set gap from a driver-desired deceleration is so set as to cause the vacuum brake booster to produce a base hydraulic pressure upon braking operation.
Fig. 6 is a deceleration characteristic diagram depicting a relationship between a deceleration and a driver-input at a time when a maximum regenerative torque is produced for compensating a driver-desired deceleration by the vacuum brake booster and the regenerative braking upon braking operation.
Fig. 7 is a deceleration characteristic diagram depicting a relationship between a deceleration and a driver-input at a time when a regenerative cooperative control is carried out for compensating a driver-desired deceleration by the vacuum brake booster, the regenerative braking and the VDC brake fluid pressure unit upon braking operation.
Fig. 8 is a graph showing a correlation of a deceleration induced by a regenerative braking force produced by a vehicle drive electric motor relative to a vehicle speed, which is carried out in the brake control device of the embodiment-1.
Fig. 9 is a graph showing a correlation between a target deceleration and a deceleration induced by each braking device with respect to a vehicle speed, which is carried out in the brake control device of the embodiment-1.
Fig. 10 is a P-I map showing a relationship between a target pressure difference achieved by a first M/C cut solenoid valve (differential pressure regulating valve) installed in the VDC brake fluid pressure unit and an operation current, which is carried out in the brake control device of the embodiment-1.
Fig. 11 is a time chart showing a rotation speed of the VDC motor, a drive current for the differential pressure regulating valve, a wheel cylinder pressure, a deceleration and a vehicle speed in a period from a time when the braking operation starts to a time when the vehicle stops and keeps the stopped condition.

### Embodiments for carrying out Invention:

In the following, an electric vehicle brake control device of the present invention will be described with reference to an embodiment-1 shown in the drawings.

### Embodiment-1:

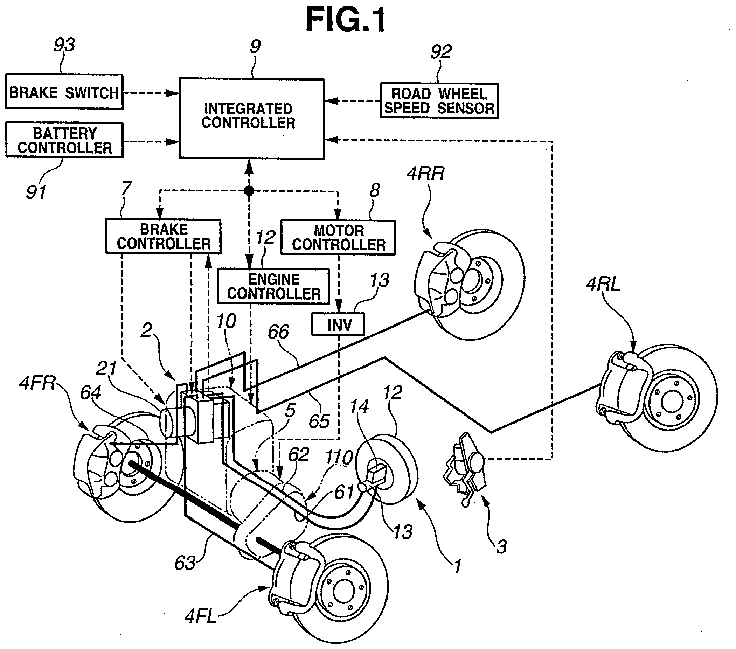

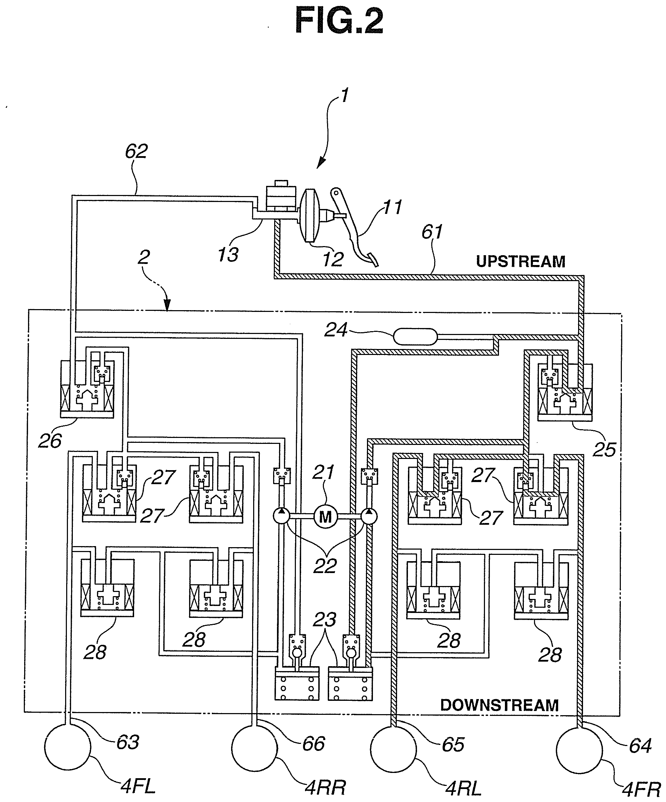

At first, the description will be directed to a construction. Fig. 1 is a diagram showing a construction of a hybrid vehicle (one example of electric vehicles) of front wheel drive type to which a brake control device of an embodiment-1 of the invention is practically applied. Fig. 2 is a schematic drawing of a brake fluid circuit showing a VDC brake fluid pressure unit (one example of brake fluid pressure actuators) employed in the brake control device. In the following, the construction of the brake system will be described with reference to Figs. 1 and 2.

As is shown in Fig. 1, a brake deceleration generating system of the brake control device of the embodiment-1 comprises a brake fluid pressure generating device 1, a VDC brake fluid pressure unit 2 (viz., brake fluid pressure actuator), a stroke sensor 3, a wheel cylinder 4FL for a front-left road wheel (which will be called "front-left wheel cylinder" hereinafter), a wheel cylinder 4FR for a front-right road wheel (which will be called "front-right wheel cylinder" hereinafter), a wheel cylinder 4RL for a rear-left road wheel (which will be called "rear-lest wheel cylinder" hereinafter), a wheel cylinder 4RR for a rear-right road wheel (which will be called "rear-right wheel cylinder hereinafter) and a vehicle drive electric motor 5.

The brake deceleration generating system of the embodiment-1 is a regenerative cooperative brake system that uses an existing VDC system (viz., Vehicle Dynamic Control) mounted on a practical vehicle (driven by engine). The VDC system is a system for carrying out a vehicle behavior control by which when, due to a high speed approaching to a corner, a sudden steering operation or the like, the vehicle is about to lose a stable attitude, undesired sideways skid of the vehicle is suppressed thereby providing the vehicle with an excellent running stability. In the VDC control that effects the automatic control in accordance with an operation condition of the vehicle, the vehicle attitude and the like are detected by sensors, and for example, if over-steering is judged, the control is so made as to brake the outer side front road wheel, and if under-steering is judged, the control is so made as to brake the inner side rear road wheel while lowering the driving power.

The brake fluid pressure generating device 1 is a base hydraulic pressure generating means that generates a base hydraulic pressure in accordance with a braking operation made by a driver. As is shown in Figs. 1 and 2, the brake fluid pressure generating device 1 comprises a brake pedal 11, a vacuum brake booster 12, a master cylinder 13 and a reservoir tank 14. That is, a brake pressing force which is produced by a driver and applied to brake pedal 11 is multiplied by vacuum brake booster 12 and at master cylinder 13, there are produced primary and secondary pressures by a master cylinder pressure. Design is so made that a deceleration induced or caused by the master cylinder pressure is smaller than that desired by a driver.

The VDC brake fluid pressure unit 2 is disposed between brake fluid pressure generating device 1 and each of wheel cylinders 4FL, 4FR, 4RL and 4RR. The VDC brake fluid pressure unit 2 is equipped with hydraulic pumps 22 and 22 driven by a VDC motor 21 (pump motor) and constitutes a brake fluid pressure actuator that controls increase, holding or decrease of the master cylinder pressure. The VDC brake fluid pressure unit 2 and the brake fluid pressure generating device 1 are connected through a primary hydraulic pipe 61 and a secondary hydraulic pipe 62. The VDC brake fluid pressure unit 2 and each of the wheel cylinders 4FL, 4FR, 4RL and 4RR are connected through a front-left hydraulic pipe 63, a front-right hydraulic pipe 64, a rear-left hydraulic pipe 65 and a rear-right hydraulic pipe 66. That is, upon braking operation, the master cylinder pressure produced by brake fluid pressure generating device 1 is compressed by VDC brake fluid pressure unit 2 and added to wheel cylinders 4FL, 4FR, 4RL and 4RR for obtaining a hydraulic pressure braking force.

As is shown in Fig. 2, the VDC brake fluid pressure generating device 1 comprises VDC motor 21, hydraulic pumps 22 and 22 driven by VDC motor 21, reservoirs 23 and 23 and a master cylinder pressure sensor 24. As solenoid valves, there are employed a first M/C cut solenoid valve 25 (differential pressure regulating valve), a second M/C cut solenoid valve 26 (differential pressure regulating valve), pressure keeping solenoid valves 27, 27, 27 and 27 and pressure reducing solenoid valves 28, 28, 28 and 28. Under operation of VDC motor 21, the first M/C cut solenoid valve 25 and second M/C cut solenoid valve 26 function to control a pressure difference between the wheel cylinder pressure (downstream pressure) and the master cylinder pressure (upstream pressure). In addition to this, when VDC motor 21 is stopped, the two solenoid valves function to control the pressure difference between the wheel cylinder pressure and the master cylinder pressure based on a motor rotation speed.

The stroke sensor 3 is a means for detecting a degree (or amount) of stroke of a brake pedal handled by a driver. Stroke sensor 3 is a device that is provided, in addition to the existing VDC system, as means for detecting a desired deceleration that is information needed for carrying out the regenerative cooperative brake control.

The wheel cylinders 4FL, 4FR, 4RL and 4RR are respectively associated with brake discs of the front and rear road wheels and applied with a hydraulic pressure from VDC brake fluid pressure unit 2. Upon application of the hydraulic pressure to the wheel cylinders 4FL, 4FR, 4RL and 4RR, the corresponding brake discs are squeezed by corresponding brake pads thereby to brake the front and rear road wheels.

The vehicle drive electric motor 5 is used as a vehicle driving source for driving front left and front right road wheels (drive road wheels) and has both a driving motor function and an electric generator function. Under power running of the vehicle, vehicle drive electric motor 5 transmits a drive force to the front-left and front-right road wheels through the motor driving while consuming the power of a battery. While, under regenerative operation, conversion to electric energy is carried out by applying a load to the rotation driving of the front-left and front-right road wheels, and generated energy part is stored by the battery. That is, the load applied to the rotation driving applied to the front-left and front-right road wheels produces the regenerative braking force. A driving system for the front-left and front-right road wheels (drive road wheels), to which the vehicle drive electric motor 5 is provided, is further provided with an engine 10 as a vehicle driving source that transmits a drive force to the front-left and front-right road wheels through a transmission 110.

As is shown in Fig. 1, the brake deceleration control system of the brake control device of the embodiment-1 comprises a brake controller 7, a motor controller 8 (regenerative braking force control means), an integrated controller 9 and an engine controller 12.

Upon the regenerative cooperative brake control, the brake controller 7 receives both a control instruction from the integrated controller 9 and a pressure information from the master cylinder pressure sensor 24 of the VDC brake fluid pressure unit 2. Then, in accordance with a predetermined control, the brake controller 7 issues drive instructions to the VDC motor 21 of the VDC brake fluid pressure unit 2 and the various solenoid valves 25, 26, 27 and 28. In this brake controller 7, the above-mentioned VDC control, TSC control and ABS control are carried out in addition to the regenerative cooperative brake control.

The above-mentioned motor controller 8 is connected through an inverter 13 to the vehicle drive electric motor 5 connected to the front-left and front-right road wheels which are drive road wheels, and serves as a regenerative braking force control means for controlling a regenerative braking force produced by the vehicle drive electric motor 5. The motor controller 8 further has a function to control a rotation speed of the vehicle drive electric motor 5 and a motor torque produced by the vehicle drive electric motor 5 in accordance with both a running condition and a vehicle condition under running of an associated vehicle.

Upon braking operation, the above-mentioned integrated controller 9 carries out such a control as to establish the driver-desired deceleration based on the sum of a base hydraulic pressure part produced by the master cylinder pressure and a regenerative part produced by the regenerative braking force and compensate an insufficient regenerative part with a pressure increased part produced by the VDC brake hydraulic pressure unit 2. To the integrated controller 9, there are inputted information on battery charging capacity from a battery controller 91, information on road wheel speed (=vehicle speed) from a road wheel speed sensor 92, information on brake operation from a brake switch 93 and other information.

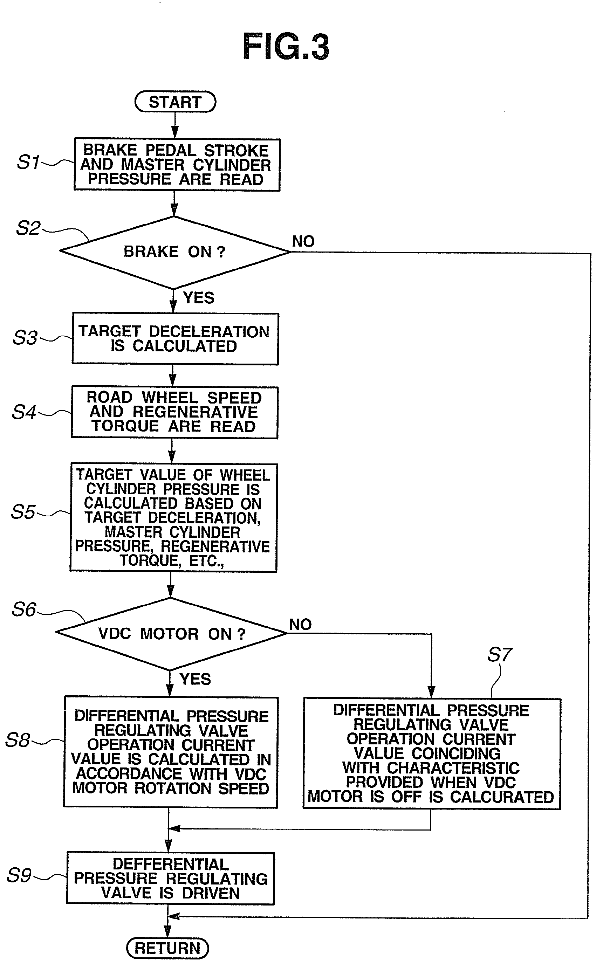

Fig. 3 is a flowchart depicting a flow of a regenerative cooperative brake control that is executed in the integrated controller 9 of the brake control device of the embodiment-1. In the following, each operation step in Fig. 3 will be explained.

At step S1, for a constant recognition of a brake control made by a driver, information on a brake pedal stroke degree (or amount) from the stroke sensor 3 and information on a master cylinder pressure from the master cylinder pressure sensor 24 are read as information on a brake operation amount, and the operation flow goes to step S2.

At step S2, after reading the information on the brake operation amount at step S1, judgment is carried out as to whether a switch signal from the brake switch 93 is ON or not. If YES (viz., Brake-ON), the operation flow goes to step S3, while, if NO (viz., Brake-OFF), the operation flow goes to RETURN.

At step S3, after judging that the Brake is ON at step S2, based on at least one of sensor values that are prepared by the brake pedal stroke amount and the master cylinder pressure that have been read at step S1, a target deceleration that is a deceleration desired by a driver is calculated and then the operation flow goes to step S4.

At step S4, after calculation of the target deceleration at step S3, the road wheel speed detected by the road wheel speed sensor 92 and a regenerative torque in accordance with the road wheel speed are read, and then the operation flow goes to step S5. It is to be noted that the regenerative torque is determined in accordance with not only the road wheel speed but also a battery charging capacity (surplus part of battery charging) presumed by the battery controller 91.

At step S5, after reading the road wheel speed and the regenerative torque at step S4, a target value of the wheel cylinder pressure is calculated based on the obtained target deceleration, the master cylinder pressure, the regenerative torque, etc., and the operation flow goes to step S6.

At step S6, after calculation of the target value of the wheel cylinder pressure at step S5, judgment is carried out as to whether the VDC motor 21 is ON or not. If YES (VDC motor: ON), the operation flow goes to step S7, while if NO (VDC motor: OFF), the operation flow goes to step S8.

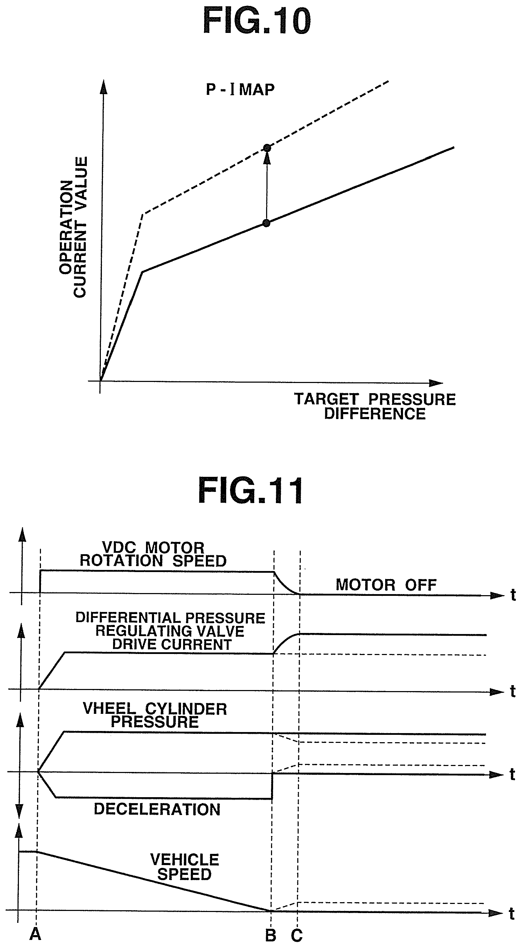

At step S7, after judging that the VDC motor is ON at step S6, a differential pressure regulating valve operation current value is calculated based on the VDC motor rotation speed, and then the operation flow goes to step S9. The differential pressure regulating valve operation current value under "VDC motor: ON" is calculated by using, for example, P - I map (see the characteristic depicted by the thicker line of Fig. 10) that shows a relationship between a target pressure difference and an operation current value.

At step S8, after judging that the VDC motor is OFF at step S6, a differential pressure regulating valve operation current value coinciding with the motor rotation speed characteristic at the time when the VDC motor is OFF is calculated, and then the operation flow goes to step S9. The differential pressure regulating valve operation current value at the time when VDC motor is OFF is increased (see the arrow of Fig. 10) in order that the target pressure difference is maintained while following a rotation speed reduction characteristic at the time when the VDC motor is OFF. Furthermore, the calculation of the operation current value is so made as to keep the target pressure difference even when rotation of the motor stops (see the characteristic depicted by the dotted line of Fig. 10).

At step S9, after calculating the differential pressure regulating valve operation current value at the time when the VDC motor is ON at step S7 or after calculating the differential pressure regulating valve operation current value at the time when the VDC motor is OFF at step S8, the calculated operation current value is practically applied to both the first M/C cut solenoid valve 25 and the second M/C cut solenoid valve 26, which are differential pressure regulating valves, for driving the same, and then the operation flow goes to RETRUN.

In the following, operation will be described. First, the description will be directed to "Regenerative cooperative brake system using the VDC". Then, operation of the brake control device of a hybrid vehicle of the embodiment-1 will be described with respect to three respective operations which are "Regenerative cooperative brake control operation using the VDC and based on a vehicle speed", "Differential pressure regulating valve actuation control operation at the time when a hydraulic pump is ON" and "Differential pressure regulating valve actuation control operation at the time when a hydraulic pump is OFF".

### [Regenerative cooperative brake system using the VDC]

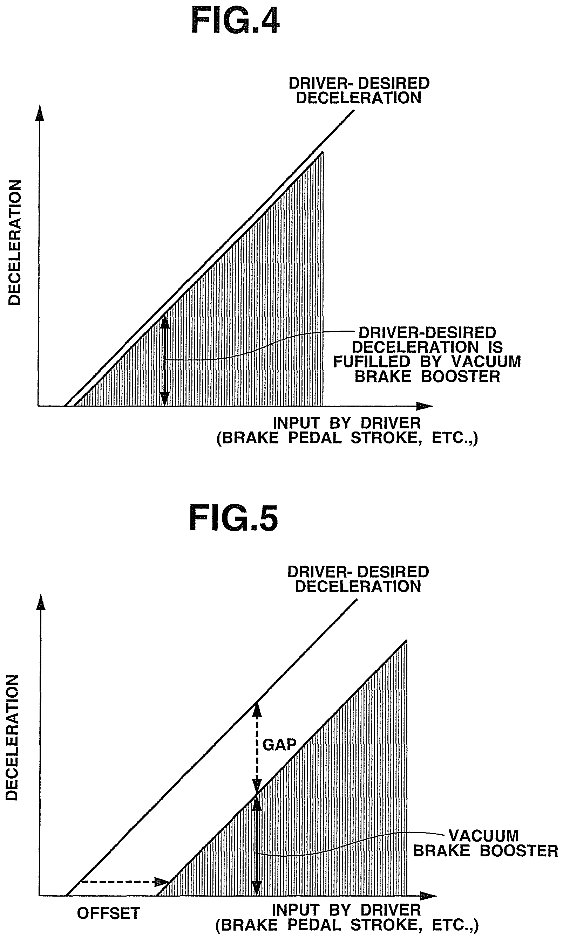

The regenerative cooperative brake control using the VDC is a control in which once a case wherein the driver-desired deceleration is not compensated by only the base hydraulic pressure part and the regenerative part takes plate, the hydraulic pressure of the part that fails to compensate is increased by the VDC brake hydraulic pressure unit thereby to establish the deceleration that is actually desired by the driver. The regenerative cooperative brake system using the VDC, which carries out the regenerative cooperative brake control, will be described with reference to Figs. 4 to 7.

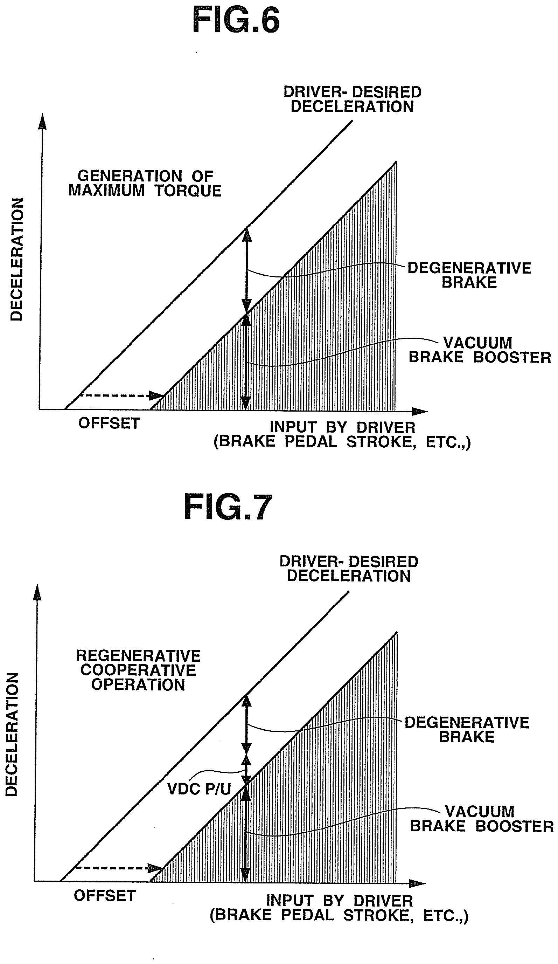

In case of a conventional VDC, as is understood from Fig. 4, a control is so made that upon braking operation, the driver-desired deceleration is obtained by the base hydraulic pressure part provided by the vacuum brake booster. While, as is seen from Fig. 5, a control is so made that upon braking operation, the base hydraulic pressure part provided by the vacuum brake booster is enforcedly offset from the driver-desired deceleration for the purpose of preventing the base hydraulic pressure part from making the driver-desired deceleration, and a gap for the deceleration is set. That is, the gap part of the deceleration corresponds to a shortage part of the deceleration that is actually desired by the driver. Thus, as is understood from Fig. 6, at the time when the maximum regenerative torque is produced, the driver-desired deceleration is compensated by the vacuum brake booster (base hydraulic pressure part) and the regenerative brake (regenerative part).

However, due to a vehicle speed condition, a battery charging condition and the like, it often occurs that the shortage of the driver-desired deceleration can not be compensated by only the regenerative part. Accordingly, as is shown in Fig. 7, the driver-desired deceleration is compensated by the vacuum brake booster (base hydraulic pressure part), the regenerative brake (regenerative part) and the VDC brake hydraulic pressure unit (pressure increased part).

Accordingly, by only making a characteristic change to the vacuum brake booster and to the VDC brake hydraulic pressure unit and an addition of the stroke sensor, an economical regenerative cooperative brake system using the VDC can be provided. That is, a safety function of the conventional VDC can be expanded (viz., safety function + regenerative cooperative function).

However, as repercussions of the expansion of the function, a new problem is brought about in which due to increased frequency in operation of the VDC motor of the VDC brake hydraulic pressure unit and elongation of the operation time, reliability in durability of the VDC motor is lowered, and thus, it is necessary to cope with the problem.

### [Regenerative cooperative brake control operation using the VDC and based on a vehicle speed]

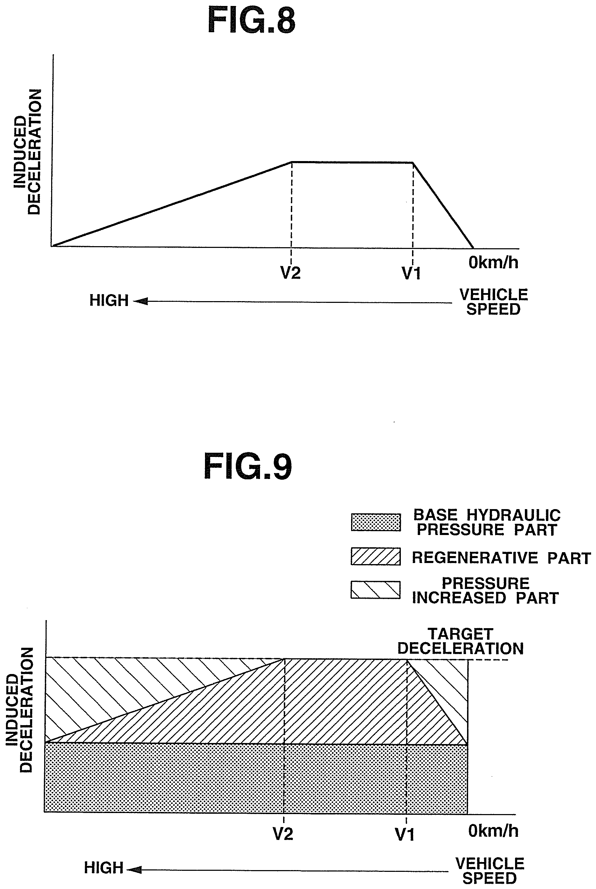

When the vehicle drive electric motor 5 is used as a regenerative motor, the deceleration provided by a regenerative braking force produced by the vehicle drive electric motor 5 shows such a characteristic as shown by Fig. 8. Usually the vehicle drive electric motor 5 is not able to generate the regenerative torque at a high speed range, and thus, when the vehicle speed lowers from the high speed range toward the 2^{nd} set speed V2, the deceleration provided by the regenerative braking force increases as the vehicle speed lowers. When the vehicle speed is in the range between the 2^{nd} set speed V2 and the 1^{st} set speed V1, the regenerative braking force shows the maximum value. Furthermore, when the vehicle is in the standstill, the regenerative braking force is not produced, and thus, when the vehicle speed is in the range between the 1^{st} set speed V1 and the speed of 0km/h, the deceleration provided by the regenerative braking force decreases as the vehicle speed lowers.

As is described hereinabove, the regenerative braking force varies in accordance with the vehicle speed V, and thus, when the vehicle speed is in the maximum regeneration vehicle speed range "V1 < V ≤ V2", a target deceleration (= desired deceleration) is obtained by the regenerative cooperative control that, as is seen from Fig. 9, compensates the deceleration provided by the base hydraulic pressure part with the deceleration provided by the regenerative part. However, when the vehicle speed V is in a speed range "V > V2" where the regenerative braking force is increasing, or in a speed range "0 < V ≤ V1" where the regenerative braking force is reducing, the deceleration provided by the base fluid pressure part is not compensated by only the deceleration provided by the regenerative part, as is seen from Fig. 9. Accordingly, if a condition wherein the driver-desired deceleration is not compensated by the base hydraulic pressure part and the regenerative part takes place, the hydraulic pressure of the part that is not compensated by the VDC brake hydraulic pressure unit 2 is increased thereby to establish the driver-desired deceleration.

As is mentioned hereinabove, in the speed reducing range where increased pressure is needed from a time when a braking operation starts to a time when the vehicle stops, the VDC motor 21 is turned ON and the regenerative cooperative brake control is carried out. With this, upon braking operation, the target deceleration (=desired deceleration) is obtained by the (base hydraulic pressure part + regenerative part) or (base hydraulic pressure part + regenerative part + pressure increased part) without respect to a vehicle speed change caused by the speed reduction.

When the vehicle speed becomes zero and thus the vehicle stops, there is produced no regenerative part as is depicted by the characteristic of 0 km/h of Fig. 9, and thus, the target deceleration (=desired deceleration) is obtained by (base hydraulic pressure part + pressure increased part). By turning OFF the VDC motor 21 just at the time when the vehicle stops, the operation frequency of the VDC motor 21 can be lowered, which improves the reliability in durability of the VDC motor.

### [Differential pressure regulating valve actuation control operation at the time when a hydraulic pump is ON]

As is mentioned hereinabove, in the speed reduction range from the braking start to the vehicle stop, an increased pressure part is needed and thus there is employed a system of turning the VDC motor 21 ON. In the following, the differential pressure regulating valve actuation control operation at the time when the VDC motor is ON, which reflects the above-mentioned matter, will be described.

When, under running of the vehicle, a braking operation is started, the VDC motor 21 is turned ON, and the operation flow in the flowchart of Fig. 3 from step S1 to step S9 through steps S2, S3, S4, S5, S6 and S7 is repeated. At step S7, a differential pressure regulating valve operation current value is calculated based on the VDC motor rotation speed, and at step S9, the calculated operation current value is practically applied to both the first M/C cut solenoid valve 25 and the second M/C cut solenoid valve 26, which are differential pressure regulating valves, for driving the same.

Now, the calculation of the differential pressure regulating valve operation current value at the time when the VDC motor is ON will be described. As will be understood from the solid characteristic line of Fig. 10, a "P - I" map showing a relationship between a target pressure difference and the operation current value at the time when the VDC motor is ON has to be prepared. Once the target pressure difference is determined with reference to the amount of the pressure increased part, a corresponding operation current value is looked up from the P - I map. Like this, when the target pressure difference is varied due to variation of the amount of the pressure increased part, the operation current value is varied in accordance with the variation of the target pressure increased part.

Fig. 11 is a time chart depicting a period from a time A when a driver effects a braking operation to a time B when an associated vehicle stops after reducing its speed. During the speed reducing period from the time A to the time B, the VDC motor is kept ON and the rotation speed of the motor is kept at a constant speed. The differential pressure regulating valve operation current is raised at the time A to a predetermined current value, and thereafter the operation current value keeps the predetermined current value to the time B. Accordingly, the wheel cylinder pressure and the deceleration are raised to respective predetermined degrees in accordance with the differential pressure regulating valve operation current, and thereafter the wheel cylinder pressure and the deceleration keep the predetermined degrees to the time B. As is described hereinabove, in the speed reducing range that needs a pressure increase from the time A when the braking operation is started to the time B when the vehicle stops, the VDC motor is ON and the regenerative cooperative brake control is carried out.

Accordingly, when a braking action is effected at the time A, a target deceleration (=desired deceleration) is achieved with the aid of (base hydraulic pressure part + regenerative part) or (base hydraulic pressure part + regenerative part + pressure increased part), and as is seen from the vehicle speed characteristic shown by Fig. 11, the vehicle can stop at the time B after keeping its deceleration at a generally constant level.

### [Differential pressure regulating valve actuation control operation at the time when a hydraulic pump is OFF]

As is mentioned hereinabove, for providing the VDC motor 21 with a certain durability, one measure is employed wherein when the associated vehicle stops, the VDC motor 21 is turned OFF. Now, the reason why the pressure difference is lowered to a level below a given level if the control set for a condition wherein the VDC motor is ON is kept at a condition wherein the VDC motor is OFF.

Upon operation of the VDC motor 21, the pressurized brake fluid from the hydraulic pumps 22 and 22 increases the wheel cylinder pressure. However, when the wheel cylinder pressure is increased causing the pressure different to exceed a predetermined level, a brake fluid release toward the master cylinder 13 is carried out through the first M/C cut solenoid valve 25 and second M/C cut solenoid valve 26 which are differential pressure regulating valves, so that the wheel cylinder pressure is controlled to keep the predetermined level.

However, when the VDC motor 21 is stopped, the flow of the brake fluid is suppressed, and thus there is no brake fluid that is to be released to the master cylinder side through the first M/C cut solenoid valve 25 and second M/C cut solenoid valve 26 which are differential pressure regulating valves. Under this condition, the pressure increased part in the side of the wheel cylinders 4FL, 4FR, 4RL and 4RR, which has been produced due to an office effect of the first M/C cut solenoid valve 25 and second M/C cut solenoid valve 26, is reduced. As a result, if the operation current value for the first M/C cut solenoid valve 25 and second M/C cut solenoid valve 26 is determined by a feed forward control with the VDC motor 21 being kept ON, turning the VDC motor OFF causes the pressure difference between the master cylinder pressure and the wheel cylinder pressure to become lower than the predetermined level.

Furthermore, when, for increasing the durability, the vehicle stops with its speed of 0km/h, the VDC motor 21 is turned OFF. In this case, as is indicated by the dotted line of the differential pressure regulating valve drive current of Fig. 11, the operation current value for the solenoid valves 25 and 26 is kept. In this case, as is indicated by the dotted line of the wheel cylinder pressure of Fig. 11, due to reduction of the wheel cylinder pressure, it becomes lower than the driver-desired deceleration (the characteristic denoted by the solid line) as is indicated by the dotted line of the deceleration of Fig. 11. As a result, as is indicated by the dotted line of the vehicle speed of Fig. 11, the standstill of the vehicle can not be maintained. This causes a driver to press a brake pedal inducing ON condition of the VDC motor 21, and thus, the durability and consumed electric power (fuel economy) become deteriorated.

In the following, the differential pressure regulating valve actuation control operation with the VDC motor being OFF, which solves the above-mentioned drawback, will be described. When the vehicle is stopped due to the deceleration based on the braking operation, the VDC motor 21 is turned OFF, and the operation flow in the flowchart of Fig. 3 from step S1 to step S9 through steps S2, S3, S4, S5, S6 and S8 is repeated. At step S8, a differential pressure regulating valve operation current value matched with the characteristic of the rotation speed at the time when the VDC motor is OFF is calculated, and at step S9, the calculated operation current value is practically applied to both the first M/C cut solenoid valve 25 and the second M/C cut solenoid valve 26, which are differential pressure regulating valves, for driving the same.

Now, the calculation of the differential pressure regulating valve operation current value at the time when the VDC motor is OFF will be described. As is indicated by the arrow in Fig. 10, upon taking OFF condition of the VDC motor, the operation current value is gradually increased in such a manner as to keep a target pressure difference following the characteristic of rotation speed reduction induced by "ON -> OFF" shift of the motor. As is indicated by the dotted characteristic line of Fig. 10, even when the motor is stopped, the operation current value is controlled to keep the target pressure difference.

As is mentioned hereinabove, when the VDC motor shifts its state from ON to OFF, a pressure difference control set for a condition with the VDC motor 21 being OFF is carried out in place of a pressure difference control set for a condition with the VDC motor 21 being ON, based on the rotation speed of the VDC motor 21 that represents a flow rate variation of the brake fluid. That is, as is indicated by the characteristic line of the VDC motor rotation speed of Fig. 11, when the motor is turned OFF at the time B, the rotation speed of the motor is gradually reduced in a period from the time B to the time C, and after the time C, the motor is completely stopped. Accordingly, in the period from the time B to the time C, the drive current is increased while coinciding with the speed reduction characteristic of the motor as is indicated by the solid line of the differential pressure regulating valve drive current of Fig. 11, and after the time C, the increased drive current is kept without change.

Accordingly, as is indicated by the solid line of the wheel cylinder pressure of Fig. 11, even after stopping of the vehicle, the wheel cylinder pressure used for reducing the vehicle speed is kept without change, and thus a braking force produced by a certain pressure increased part is obtained, and thus, as is indicated by the solid line of the vehicle speed of Fig. 11, the standstill condition of the vehicle can be maintained. That is, uncomfortable feeling caused by reduction of the deceleration at the time of stopping the VDC motor 21 can be solved.

In the following, advantages will be described. The brake control device of the embodiment-1 mounted on a hybrid motor vehicle has the following advantages.
(1) The brake control device comprises a master cylinder 13 that produces a master cylinder pressure in accordance with a driver's action, wheel cylinders 4FL, 4FR, 4RL and 4RR that are connected to front and rear road wheels to apply each road wheel with a hydraulic pressure in accordance with a braking force, a brake hydraulic pressure actuator (VDC brake hydraulic pressure unit 2) that comprises hydraulic pumps 22 and 22 that are each disposed between the master cylinder 13 and corresponding two of the wheel cylinders 4FL, 4FR, 4RL and 4RR and driven by a pump motor (VDC motor 21) and differential pressure regulating valves (first M/C cut solenoid valve 25 and second M/C cut solenoid valve 26) that control a pressure difference between the wheel cylinder pressure and the master cylinder pressure at the time when the pump motor (VDC motor 21) is ON, a regenerative braking force control means (motor controller 8) that is connected to a vehicle drive electric motor 5 connected to drive road wheels and controls a regenerative braking force produced by the vehicle drive electric motor 5, a regenerative cooperative brake control means (integrated controller 9, see Fig. 3) that, upon braking operation, carries out such a control as to establish a driver-desired deceleration based on the sum of a base hydraulic pressure part produced by the master cylinder pressure and a regenerative part produced by the regenerative braking force and compensate an insufficient regenerative part with a pressure increased part produced by the brake hydraulic pressure actuator (VDC brake hydraulic pressure unit 2) and a differential pressure regulating valve operation control means (step S6 to step S8 of Fig 3) that, when the pump motor (VDC motor 21) is turned OFF under operation of the regenerative cooperative braking control, carries out the pressure difference control, which is carried out by the differential pressure regulating valves (first M/C cut solenoid valve 25 and second M/C cut solenoid valve 26), in accordance with a rotation speed of the pump motor (VDC motor 21). With this, at the time when the pump motor (VDC motor 21) for compensating the pressure increased part under the regenerative cooperative brake control is stopped, uncomfortable feeling that would attack the driver due to lowering of the deceleration can be avoided. Furthermore, since too frequent brake pedal pressing and too deep brake pedal pressing can be suppressed, improvement in durability of the pump motor (VDC motor 21) and reduction in power consumption are achieved.
(2) After stopping of the pump motor (VDC motor 21), the differential pressure regulating valve operation control means (step S6 to step S8 of Fig. 3) carries out the pressure difference control by the differential pressure regulating valves (first M/C cut solenoid valve 25 and second M/C cut solenoid valve 26) in such a manner as to increase the pressure difference between the wheel cylinder pressure and the master cylinder pressure in accordance with reduction of the rotation speed of the pump motor (VDC motor 21). Accordingly, in addition to the above-mentioned effect of the item (1), reduction of the braking force caused by the wheel cylinder pressure can be assuredly suppressed.
(3) After stopping of the pump motor (VDC motor 21), the differential pressure regulating valve operation control means (step S6 to step S8 of Fig. 3) carries out the pressure difference control in such a manner as to keep the wheel cylinder pressure to the level, which has been kept before the stopping of the pump motor (VDC motor 21), in accordance with the characteristic of the motor speed reduction of the pump motor (VDC motor 21). Accordingly, in addition to the above-mentioned effect of the item (2), a driver-desired braking force can be maintained during the stop of the pump motor (VDC motor 21), and thus, uncomfortable feeling, which would attack the driver under a very low speed running and at standstill of the vehicle, can be solved and easiness for the braking operation can be increased.
(4) Upon stopping of the vehicle by the regenerative cooperative brake control based on the braking operation, the regenerative cooperative brake control means (integrated controller 9, Fig. 3) carries out a motor control in such a manner as to stop the pump motor (VDC motor 21) which has been operated in the speed reduction range just before the vehicle stopping. Accordingly, in addition to the above-mentioned effects of the items (1), (2) and (3), reliability in durability of the motor due to stopping of the pump motor (VDC motor 21) can be increased and stopping of the vehicle with the pump motor (VDC motor 21) kept OFF can be realized.

In the above, the brake control device of an electric vehicle has been described with respect to the embodiment-1 of the present invention. However, the concrete construction of the invention is not limited to the above-mentioned embodiment-1, and changes in designing and modifications may be carried out without deviating from the scope of Claims.

In the embodiment-1, there is explained an example of the pressure difference control in which after stopping of the VDC motor 21, the wheel cylinder pressure that has been kept before the stopping of the VDC motor 21 is still kept in accordance with the characteristic of the rotation speed reduction of the VDC motor 21. However, if desired, a pressure difference control may be carried out in which after stopping of the VDC motor, the wheel cylinder pressure is not lowered below the level that has been kept before stopping the VDC motor. In this case, by adding a somewhat higher pressure is added to the wheel cylinder pressure at the time of stopping the vehicle, standstill condition of the vehicle can be maintained.

In the embodiment-1, the VDC motor 21 is turned ON in entire speed reduction range induced by the braking operation and the VDC motor 21 is turned OFF when the vehicle stops. However, if desired, a motor ON/OFF control may be effected in such a manner that the VDC motor is turned OFF in a given range from the vehicle speed V2 to the vehicle speed V1 in the entire speed reduction range induced by the braking operation which given range does not need the increased pressure part. Furthermore, another motor ON/OFF control may be effected in such a manner that the VDC motor is turned OFF in a range that includes the given range from V2 to V1 and a vehicle speed range from the time when the braking operation starts with the increased pressure part being reduced to the time of the vehicle speed V2. In this case, uncomfortable feeling that would attack the driver due to lowering of the deceleration at the time when the VDC motor is turned OFF in the speed reduction range can be avoided.

In the embodiment-1, there is explained an example in which as the brake fluid pressure actuator, the VDC brake fluid pressure unit 2 shown in Fig. 2 is used. However, as the brake fluid pressure actuator, any type unit may be used so long as the unit has a hydraulic pump that is driven by the VDC motor and a differential pressure regulating valve that controls the pressure difference between the wheel cylinder pressure and the master cylinder pressure under operation of the pump motor.

In the embodiment-1, there is explained an example in which the invention is applied to a front-drive hybrid vehicle. However, if the vehicle is a rear-drive hybrid vehicle, an electric vehicle, a fuel-cell vehicle or the like, the brake control device of the invention can be applied to the vehicle. In case of an electrically driven vehicle that has no engine mounted thereon, an electric brake booster is used in place of the vacuum brake booster.

## Claims

1. A brake control device of an electric vehicle, comprising:
a master cylinder (13) that produces a master cylinder pressure in accordance with a driver's operation;
a wheel cylinder (4FL,4FR,4RL,4RR) that is provided by each of front and rear road wheels to apply each road wheel with a hydraulic braking force in accordance with a wheel cylinder (4FL,4FR,4RL,4RR) pressure;
a brake fluid pressure actuator (2) that is arranged between the master cylinder (13) and the wheel cylinders (4FL,4FR,4RL,4RR) and includes a hydraulic pump driven by a pump motor (21) and a differential pressure regulating valve (25,26) that controls a pressure difference between the wheel cylinder (4FL,4FR,4RL,4RR) pressure and the master cylinder pressure under operation of the pump motor (21);
a regenerative braking force control means (8) that is connected to a vehicle drive electric motor (5) connected to the drive road wheels and controls a regenerative braking force produced by the vehicle drive electric motor (5);
a regenerative cooperative brake control means (9) that carries out such a control as to achieve a driver-desired deceleration based on the sum of a base hydraulic pressure part produced by the master cylinder pressure and a regenerative part produced by the regenerative braking force and compensates an insufficient regenerative part with a pressure increased part produced by the brake fluid pressure actuator (2); and
**characterised by**
a differential pressure regulating valve operation control means that, upon stopping of the pump motor (21) due to the regenerative cooperative brake control, carries out the pressure difference control of the differential pressure regulating valve (25,26) from the time when, under the regenerative cooperative brake control, the pump motor (21) is deenergized to the time when rotation of the motor is stopped, in accordance with a speed reduction characteristic of the pump motor (21), wherein
after stopping of the pump motor (21), the differential pressure regulating valve control means carries out the pressure difference control of the differential pressure regulating valve (25,26) in such a manner as to increase the pressure difference between the wheel cylinder pressure and the master cylinder pressure in accordance with a lowering of the motor rotation speed of the pump motor (21), and
after stopping of the pump motor (21), the differential pressure regulating valve control means carries out the pressure differential control in such a manner as to keep the wheel cylinder pressure to the level, which has been kept before the stopping of the pump motor (21), in accordance with the characteristic of the motor speed reduction of the pump motor (21).

2. A brake control device of an electric vehicle according to claim 1, wherein the regenerative cooperative brake control means (9) carries out such a motor control as to stop the pump motor (21), which has been operated in a speed reduction range just before stopping of rotation of the pump motor (21), when the vehicle is stopped due to the regenerative cooperative brake control based on the brake control.

## Patentansprüche

1. Eine Brems-Steuer-Vorrichtung für ein Elektro-Fahrzeug, die umfasst:
einen Haupt-Zylinder (13), der einen Haupt-Zylinder-Druck in Übereinstimmung mit einer Fahrer-Betätigung erzeugt;
einen Rad-Zylinder (4FL, 4 FR, 4RL, 4RR), der an jedem von Vorder- und Hinter-Straßen-Rädern vorgesehen ist um auf jedes Straßen-Rad eine Hydraulik-Brems-Kraft in Übereinstimmung mit einem Rad-Zylinder (4FL, 4FR, 4RL, 4RR) Druck aufzubringen;
einen Brems-Fluid-Druck-Aktuator (2), der zwischen dem Haupt-Zylinder (13) und den Rad-Zylindern (4FL, 4FR, 4RL, 4RR) angeordnet ist, und eine Hydraulik-Pumpe beinhaltet, die durch einen Pumpen-Motor (21) angetrieben ist und ein Differential-Druck-Regel-Ventil (25, 26) beinhaltet, das eine Druck-Differenz zwischen dem Rad-Zylinder (4FL, 4FR, 4RL, 4RR) Druck und dem Haupt-Zylinder-Druck, unter Betätigung des Pumpen-Motors (21), steuert;
eine Regenerativ-Brems-Kraft-Steuer-Einrichtung (8), die zu einem Fahrzeug-Antriebs-Elektro-Motor (5) verbunden ist, der mit den Antriebs-Straßen-Rädern verbunden ist und eine Regenerativ-Brems-Kraft steuert, die durch den Fahrzeug-Antriebs-Elektro-Motor (5) erzeugt ist;
eine Regenerativ-Kooperativ-Brems-Steuer-Einrichtung (9), die so eine Steuerung ausführt, so dass eine fahrer-gewünschte Verzögerung aufgrund der Summe eines Basis-Hydraulik-Druck-Anteils, erzeugt durch den Haupt-Zylinder-Druck, und einen Regenerativ-Anteil, erzeugt durch die Regenerativ-Bremskraft, erreicht ist, und einen unzureichenden Regenerativ-Anteil mit einem druckerhöhten Anteil, erzeugt durch den Brems-Fluid-Druck-Aktuator (2), kompensiert; und **gekennzeichnet durch**
eine Differential-Druck-Regel-Ventil-Betätigungs-Steuer-Einheit, die bei Anhalten des Pumpen-Motors (21) aufgrund der Regenerativ-Kooperativ-Brems-Steuerung, die Druck-Differenz-Steuerung des Differential-Druck-Regel-Ventils (25, 26) ausführt von der Zeit, wenn unter der Regenerativ-Kooperativ-Brems-Steuerung der Pumpen-Motor (21) abgeschaltet ist, zu der Zeit, wenn Drehung des Motors gestoppt ist in Übereinstimmung mit einer Geschwindigkeits-Reduktions-Charakteristik des Pumpen-Motors (21), wobei
nach dem Stoppen des Pumpen-Motors (21) die Differential-Druck-Regel-Ventil-Steuer-Einrichtung die Druck-Differenz-Steuerung des Differential-Druck-Regel-Ventils (25, 26) in so einer Weise aus ausführt, so dass die Druck-Differenz zwischen dem Rad-Zylinder-Druck und dem Haupt-Zylinder-Druck ansteigt, in Übereinstimmung mit einem Absenken der Motor-Dreh-Geschwindigkeit des Pumpen-Motors (21), und
nach dem Stoppen des Pumpen-Motors (21) die Differential-Druck-Regel-Ventil-Steuer-Einrichtung die Druck-Differential-Steuerung ausführt, in so einer Weise, dass der Rad-Zylinder-Druck auf einen Wert gehalten ist, der vor dem Anhalten des Pumpen-Motors (21) gehalten ist, in Übereinstimmung mit der Charakteristik der Motor-Geschwindigkeits-Reduktion des Pumpen-Motors (21).

2. Eine Brems-Steuer-Vorrichtung von einem Elektro-Fahrzeug gemäß Anspruch 1, wobei die Regenerativ-Kooperativ-Brems-Steuer-Einrichtung (9) eine MotorSteuerung ausführt, so dass der Pumpen-Motor (21) stoppt, der in einem Geschwindigkeits-Reduktions-Bereich betätigt worden ist, unmittelbar vor dem Stoppen der Drehung des Pumpen-Motors (21), wenn das Fahrzeug stoppt, aufgrund der Regenerativ-Kooperativ-Brems-Steuerung basierend auf der Brems-Steuerung.

## Revendications

1. Dispositif de commande de frein de véhicule électrique, comprenant :
un maître-cylindre (13) qui génère une pression de maître-cylindre en fonction de l'actionnement d'un conducteur ;
un cylindre de roue (4FL, 4FR, 4RL, 4RR) dont est équipée chacune des roues de route avant et arrière pour appliquer à chaque roue de route une force de freinage hydraulique en fonction d'une pression de cylindre de roue (4FL, 4FR, 4RL, 4RR) ;
un actionneur de pression de fluide de freinage (2) qui est disposé entre le maître-cylindre (13) et les cylindres de roue (4FL, 4FR, 4RL, 4RR) et comprend une pompe hydraulique entraînée par un moteur de pompe (21) ainsi qu'une soupape de régulation de pression différentielle (25, 26) qui commande une différence de pression entre la pression de cylindre de roue (4FL, 4FR, 4RL, 4RR) et la pression de maître-cylindre pendant le fonctionnement du moteur de pompe (21) ;
un moyen de commande de force de freinage régénératif (8) qui est relié à un moteur électrique d'entraînement de véhicule (5) relié aux roues de route motrices et qui commande une force de freinage régénératif générée par le moteur électrique d'entraînement de véhicule (5) ;
un moyen de commande de freinage coopératif régénératif (9) qui exécute une commande de manière à obtenir une décélération voulue par le conducteur sur la base de la somme d'une partie de pression hydraulique de base produite par la pression de maître-cylindre et d'une partie régénérative produite par la force de freinage régénératif, et qui compense une partie régénérative insuffisante avec une partie augmentée en pression produite par l'actionneur de pression de fluide de freinage (2) ; et
**caractérisé par**
un moyen de commande de fonctionnement de soupape de régulation de pression différentielle qui, lors de l'arrêt du moteur de pompe (21) dû à la commande de freinage coopératif régénératif, exécute la commande de différence de pression de la soupape de régulation de pression différentielle (25, 26) entre le moment où, sous l'effet de la commande de freinage coopératif régénératif, le moteur de pompe (21) n'est plus alimenté, et le moment où la rotation du moteur est stoppée, en fonction d'une caractéristique de réduction de vitesse du moteur de pompe (21), dans lequel
après l'arrêt du moteur de pompe (21), le moyen de commande de soupape de régulation de pression différentielle exécute la commande de différence de pression de la soupape de régulation de pression différentielle (25, 26) de manière à augmenter la différence de pression entre la pression de cylindre de roue et la pression de maître-cylindre en fonction d'un abaissement de la vitesse de rotation de moteur du moteur de pompe (21), et
après l'arrêt du moteur de pompe (21), le moyen de commande de soupape de régulation de pression différentielle exécute la commande de différence de pression de manière à maintenir la pression de cylindre de roue au niveau qui a été maintenu avant l'arrêt du moteur de pompe (21), en fonction de la caractéristique de la réduction de vitesse de moteur du moteur de pompe (21).

2. Dispositif de commande de freinage de véhicule électrique selon la revendication 1, dans lequel le moyen de commande de freinage coopératif régénératif (9) exécute une commande de moteur de manière à stopper le moteur de pompe (21), qui a fonctionné dans une plage de réduction de vitesse juste avant l'arrêt de la rotation du moteur de pompe (21), lorsque le véhicule est arrêté en raison de la commande de freinage coopératif régénératif sur la base du la commande de freinage.
